# EUROPÄISCHE PATENTSCHRIFT

(11) **EP 0 701 665 B1**
(45) Veröffentlichungstag und Bekanntmachung des Hinweises auf die Patenterteilung: **24.05.2000**
(21) Anmeldenummer: 95914335.5
(22) Anmeldetag: 31.03.1995
(51) Int. Cl.: F16D 13/70, F16D 13/71, F16D 13/64, F16D 69/04

(54) **KUPPLUNG**
CLUTCH
EMBRAYAGE

(30) Priorität: 02.04.1994 DE 4411641
(43) Veröffentlichungstag der Anmeldung: 20.03.1996
(73) Patentinhaber: GKN Sinter Metals GmbH, 42477 Radevormwald (DE); Raybestos Industrie-Produkte GmbH, 54497 Morbach (DE)
(72) Erfinder: GONIA, Detlef, D-42719 Solingen (DE); MANOLACHE, Valentin, D-42477 Radevormwald (DE); SCHULZ, Norbert, D-51709 Marienheide (DE)
(74) Vertreter: Maxton, Alfred, Dipl.-Ing.
(86) Internationale Anmeldenummer: EP9501198
(87) Internationale Veröffentlichungsnummer: WO9527153

(56) Entgegenhaltungen:
- EP-A- 0 625 647
- DE-A- 2 164 297
- DE-A- 2 853 298
- DE-A- 2 922 165
- DE-A- 3 046 612
- DE-B- 1 575 906
- FR-A- 2 129 509
- FR-A- 2 546 594
- GB-A- 2 009 885
- US-A- 2 902 130
- US-A- 3 191 734
- US-A- 3 948 364
- US-A- 4 202 432
- US-A- 4 298 112
- US-A- 4 305 494
- US-A- 5 154 683
- PATENT ABSTRACTS OF JAPAN vol. 12 no. 41 (M-666) ,6.Februar 1988 & JP,A,62 194035 (KOMATSU) 26.August 1987

## Beschreibung

Die Erfindung betrifft eine schaltbare Kupplung, insbesondere für Kraftfahrzeuge, mit wenigstens einer Kupplungsscheibe, wenigstens einem Gegenläufer und einer Druckplatte.

Derartige Kupplungen werden häufig als sogenannte Einscheibentrockenkupplungen ausgebildet, bei der die drehfest auf der Abtriebswelle angeordnete Kupplungsscheibe über Federelemente mittels einer Druckplatte gegen den Gegenläufer gedrückt wird. Die reibschlüssige Kraftübertragung findet bei einer solchen Kupplung zwischen der Reibfläche des im allgemeinen organischen Reibbelags der Kupplungsscheibe und der Reibfläche des Gegenläufers einerseits und der Reibfläche des auf der anderen Seite der Kupplungsscheibe angeordneten Reibbelags und der Reibfläche der Druckplatte andererseits statt. Im folgenden wird zwischen der Reibfläche des Gegenläufers und der der Druckplatte nicht mehr unterschieden und überwiegend nur noch von der Reibfläche des Gegenläufers gesprochen, ohne daß damit gesagt sein soll, daß die Reibfläche des Gegenläufers und der Druckplatte identisch ausgebildet sind.

Die Reibbeläge der Kupplungsscheibe bestehen in der Regel aus einem organischen Material, das durch Fasern, textile Materialien, Kunstharz oder dgl. verstärkt ist und in Abhängigkeit von den Anforderungen beispielsweise auch Metallpartikel oder keramische Bestandteile enthalten kann. Die Reibfläche des Gegenläufers besteht insbesondere bei Einscheibentrockenkupplungen aus dem Material, aus dem der Gegenläufer und die Druckplatte bestehen. Der Gegenläufer ist im allgemeinen gleichzeitig als Schwungrad des Antriebsmotors ausgebildet und besteht im allgemeinen aus Grauguß und in selteneren Fällen aus Stahl.

Die Reibpaarung der Kupplung zur reibschlüssigen Kraftübertragung wurde an die gestellten Anforderungen im allgemeinen nur durch eine entsprechende Auswahl der Reibbeläge auf der Kupplungsscheibe angepaßt. Es hat sich jedoch gezeigt, daß die dadurch darstellbaren Reibpaarungen nicht immer den gewünschten Anforderungen entsprechen. Insbesondere erhält die Kupplungsscheibe beispielsweise durch metallische Bestandteile im ReibLelag ein zu hohes Trägheitsmoment, das sich nachteilig auf den Einkuppelvorgang auswirkt.

EP 0 625 647 A1 offenbart als nachveröffentlichter Stand der Technik einen Kupplungsring, der mit Reibsegmenten aus Sintermetall belegt ist. In US-5,154,683 ist eine Kupplung offenbart, bei welcher die Kupplungsscheibe keinen Belag aufweist und bei welcher die Druckplatte und/oder der Gegenläufer mit einem lose eingesetzten, gesonderten Reibring versehen ist, der axial gesichert relativ drehbar gehalten ist. Der Zwischenring weist einen ersten Reibbelag auf, der an Gegenläufer bzw. der Druckplatte anliegt und einen zweiten Reibbelag, der einen höheren Reibwert als der erste Reibbelag aufweist und der an der belagfreien Reibfläche der Kupplungsscheibe zur Anlage kommt. Der zweite Reibbelag soll auf Gummibasis gefertigt sein.

Schließlich offenbart US-3,191,734 eine schaltbare Kupplung mit einer Kupplungsscheibe, die beidseitig mit Reibbelägen aus einem organisch gebundenen Reibmaterial versehen ist und die einen Gegenläufer und eine Druckplatte aufweist, die jeweils Reibflächen aufweisen, die mit den Reibbelägen der Kupplungsscheibe in Wirkverbindung gelangen. Die Reibflächen an Gegenläufer und Druckplatte sind hierbei durch das Material dieser beiden Bauteile selbst, nämlich Gußeisen etc., gebildet.

Der Erfindung liegt die Aufgabe zugrunde eine Kupplung zu schaffen, bei der eine Anpassung der Reibpaarung an die gestellten Anforderungen ohne weiteres möglich ist.

Die Aufgabe wird gemäß der Erfindung dadurch gelöst, daß die Kupplungsscheibe beidseitig mit Reibbelägen aus einem organisch gebundenen Reibmaterial versehen ist, und der Gegenläufer und die Druckplatte mit Reibelementen versehen sind, wobei zumindest die Druckplatte eine Reibfläche aus einem Sintermetallwerkstoff aufweist, in dem die für eine optimale Reibpaarung zwischen dem organisch gebundenen Reibmaterial an der Kupplungsscheibe und dem Sintermetallwerkstoff der Reibelemente notwendigen schweren Bestandteile statt im organisch gebundenen Reibmaterial im Sintermetallwerkstoff enthalten sind. Die Erfindung bezieht sich insbesondere auf die Ausbildung der Reibflächen des Gegenläufers und der Druckplatte aus einem Sintermetallwerkstoff. Im folgenden wird überwiegend von der Reibfläche des Gegenläufers aus Sintermetallwerkstoff gesprochen, ohne daß damit eine Einschränkung verbunden sein soll.

Die Verwendung eines Sintermetallwerkstoffs als Reibmaterial für die Reibfläche hat den Vorteil, daß zum einen mittels pulvermetallurgischer Verfahren ein Werkstoff bereitgestellt werden kann, der hinsichtlich seines Reibverhaltens, Wärmeleitfähigkeit und mechanischer Festigkeit in einfacher Weise optimiert werden kann. Zum anderen können mittels der Pulvermetallurgie solche Werkstoffe hergestellt werden, die durch Gießen nicht oder nur sehr schwer darstellbar sind. In einer Ausführungsform der Erfindung ist vorgesehen, daß das Reibmaterial 10 bis 15% Gewichtsprozent Kupfer (Cu) aufweist. Ein besonderer Vorteil bei der Verwendung eines Reibmaterials aus Sintermetallwerkstoff ist darin zu sehen, daß der Sintermetallwerkstoff aufgrund seiner Herstellung eine gewisse Porosität aufweist, die sich günstig auf das Reibverhalten der Kupplung auswirkt. Es ist daher nicht mehr erforderlich, daß der Reibbelag der Kupplungsscheibe eine Porosität aufweist. Eine Porosität des organischen Reibbelags verringert sich aufgrund der Beschaffenheit des Materials ohnehin im Laufe der Zeit und setzt sich durch Abrieb insbesondere des im allgemeinen vorhandenen Bindemittels zu. Es hat sich gezeigt, daß sich eine auf der metallischen Reibfläche vorhandene Porosität nicht so leicht zusetzt.

Ein weiterer Vorteil bei der Verwendung eines Reibmaterials aus einem Sintermetallwerkstoff besteht darin, daß zur Optimierung der Reibpaarung schwere Bestandteile gezielt in den Gegenläufer anstatt in die Kupplungsscheibe aufgenommen werden können. Der organische Reibbelag kann hierbei im wesentlichen frei von beispielsweise Metallpartikeln sein, wodurch sein Gewicht und somit das Trägheitsmoment der Kupplungsscheibe reduziert werden können.

Je nach Größe der Kupplung und den Anforderungen, die an die Kupplung gestellt sind, kann es zweckmäßig sein, wenn der Gegenläufer und/oder die Druckplatte einstückig aus dem auch als Reibmaterial dienenden Sintermetallwerkstoff gefertigt sind. Insbesondere in Abhängigkeit von der Größe kann es jedoch in Ausgestaltung der Erfindung zweckmäßig sein, wenn die Reibfläche aus dem Sintermetallwerkstoff auf wenigstens einem Reibelement angeordnet ist, das mit dem Gegenläufer verbunden ist. Dabei kann es zweckmäßig sein, wenn das Reibelement lösbar mit dem Gegenläufer verbunden ist. Diese Ausbildung hat den Vorteil, daß der Gegenläufer bzw. die Druckplatte lediglich die erforderliche mechanische Festigkeit aufweisen muß, während das Reibelement durch eine entsprechende Auswahl des Sintermetallwerkstoffes optimal an den Reibbelag angepaßt werden kann. Weiterhin kann durch die Verwendung von Reibelementen, die nachträglich und ggf. lösbar mit dem Gegenläufer verbunden werden können, das pulvermetallurgische Herstellungsverfahren vereinfacht werden, da lediglich kleine Bauteile gefertigt werden müssen.

Die drehfeste Verbindung des Reibelementes mit dem Gegenläufer oder der Druckplatte kann beispielsweise durch Schrauben, Nieten oder durch einen entsprechend ausgebildeten Preß- oder Schrumpfsitz erfolgen. Aufgrund der hohen zu übertragenden Drehmomente kann es in Ausgestaltung der Erfindung zweckmäßig sein, wenn das Reibelement formschlüssig mit dem Gegenläufer verbunden ist. Dazu kann beispielsweise vorgesehen werden, daß das Reibelement wenigstens einen Vorsprung und/oder eine Aussparung aufweist, der bzw. die mit einer entsprechenden Aussparung bzw. einem entsprechenden Vorsprung des Gegenläufers zusammenwirkt. Der Vorsprung bzw. die Aussparung kann sich dabei in axialer und/oder in radialer Richtung erstrecken.

In Abhängigkeit von der erforderlichen Dicke des Reibelementes und der Auswahl des Reibmaterials kann es zweckmäßig sein, wenn das Reibelement einstückig aus dem als Reibmaterial dienenden Sintermetallwerkstoff gefertigt ist. In einer anderen Ausführungsform der Erfindung kann vorgesehen werden, daß das Reibelement in axialer Richtung mehrschichtig aufgebaut ist und zumindest die Reibbelagschicht aus dem Sintermetallwerkstoff besteht. Dies kann insbesondere dann zweckmäßig sein, falls das Reibmaterial nicht die erforderliche mechanische Festigkeit aufweist. In diesem Fall kann beispielsweise das Reibelement zweischichtig aufgebaut sein, wobei die dem Gegenläufer zugeordnete Tragschicht aus einem Material hoher mechanischer Festigkeit besteht. Tragschicht und Reibbelagschicht können hierbei beide mittels pulvermetallurgischer Verfahren im Verbundverfahren hergestellt werden. Selbstverständlich ist es auch möglich, die Reibbelagschicht aus dem Sintermetallwerkstoff auf ein Tragelement, das beispielsweise aus Stahl besteht, aufzutragen, um das gewünschte Reibelement zu erhalten.

In einer weiteren Ausgestaltung der Erfindung ist vorgesehen, daß das Reibelement zumindest an einem der der Reibfläche zugekehrten Randbereiche ein anderes Material als das der restlichen Reibfläche aufweist. Dies hat den Vorteil, daß die einem besonderen Verschleiß ausgesetzten Randbereiche der Reibfläche mit einem Material mit größerer Verschleißfestigkeit ausgebildet werden können. Dies ist bei der Herstellung eines Reibelementes mittels pulvermetallurgischer Verbundverfahren ohne weiteres möglich.

Im allgemeinen wird es ausreichend sein, wenn das Reibelement einstückig ringförmig ausgebildet ist. Insbesondere in Abhängigkeit von der Größe des Durchmessers der Reibfläche kann es in Ausgestaltung der Erfindung zweckmäßig sein, mehrere Reibelemente zu verwenden, so daß die Reibfläche in Umlaufrichtung auf wenigstens zwei Reibelementen angeordnet ist. Dies hat den Vorteil, daß die einzelnen Reibelemente kleiner ausgebildet werden können, wodurch das pulvermetallurgische Herstellungsverfahren weiter vereinfacht wird.

In einer weitergehenden Ausgestaltung der Erfindung ist vorgesehen, daß die Reibfläche in radialer Richtung auf wenigstens zwei Reibelementen angeordnet ist. Bei dieser Ausführungsform können beispielsweise zwei im wesentlichen konzentrisch zueinander verlaufende ringförmige Reibelemente vorgesehen werden. Das äußere Reibelement kann beispielsweise ein Reibmaterial mit höherer Verschleißfestigkeit aufweist, da in den Bereichen der Reibflächen mit größerem Durchmesser höhere Reibgeschwindigkeiten und somit höherer Verschleiß auftreten. Weiterhin kann es zweckmäßig sein, wenn derartig ausgebildete Reibelemente nicht exakt konzentrisch zueinander verlaufen, um die Bildung eines Absatzes in dem gegenüberliegenden Reibbelag zu vermeiden.

Bei der Anordnung von mehreren Reibelementen in Umfangsrichtung ist es nach einer weiteren Ausführungsform gemäß der Erfindung zweckmäßig, daß die Begrenzungskanten der nebeneinander angeordneten Reibelemente in Umfangsrichtung zumindest teilweise in einer von der radialen Richtung abweichenden Richtung verlauten. Dadurch können harte Übergänge von dem einen zum anderen Reibelement zuverlässig vermieden werden. Weiterhin kann es zweckmäßig sein, wenn zwischen den Reibelementen ein Zwischenraum vorhanden ist. Dies hat den Vorteil, daß die Reibfläche besser gekühlt wird und ein sich evtl. zwischen den Reibflächen aufbauendes Luftpolster besser abgeführt werden kann.

Zur Verbesserung der Kühlung kann in einer anderen Ausführungsform der Erfindung vorgesehen werden, daß das Reibelement zumindest an seiner der Reibfläche abgekehrten Seite mit wenigstens einer sich von der inneren zur äußeren Umfangsseite erstreckenden Nut versehen ist. Dabei kann es zweckmäßig sein, wenn die Nut sich radial von der inneren zur äußeren Umfangsseite erstreckt oder beispielsweise spiral- und/oder bogenförmig verläuft. Die Nuten befinden sich somit in eingebauter Position zwischen Gegenläufer und Reibelement, so daß Kühlluft zirkulieren kann, wodurch die Wärmeabfuhr begünstigt wird. Grundsätzlich ist es natürlich auch möglich, sich von der inneren zur äußeren Umfangsseite erstreckende Bohrungen innerhalb des Reibelementes vorzusehen, jedoch ist die Herstellung von auf der Unterseite angeordneten Nuten, insbesondere bei Reibelementen aus einem Sinterwerkstoff, wesentlich einfacher. Auch kann es zweckmäßig sein, derartige Nuten auf der Reibfläche anzuordnen.

Bei einer Kupplung ist es zur Erhöhung des Anfahrkomforts im allgemeinen üblich, daß der Reibbelag auf der Kupplungsscheibe in axialer Richtung um ein geringes Ausmaß nachgiebig angeordnet ist. In einer weitergehenden Ausführungsform der Erfindung kann vorgesehen werden, daß das Reibelement in axialer Richtung nachgiebig mit dem Gegenläufer verbunden ist. Dies hat den Vorteil, daß der Reibbelag auf der Kupplungsscheibe nicht mehr über nachgiebige Elemente mit dieser verbunden sein muß, so daß das Gewicht und insbesondere das Trägheitsmoment der Kupplungsscheibe verringert werden können.

Weiterhin kann es zweckmäßig sein, wenn bei einer Unterteilung der Reibfläche in radialer Richtung auf wenigstens zwei Reibelemente die jeweils unterschiedlichen Durchmessern zugeordneten Reibelemente mit unterschiedlichen Nachgiebigkeiten mit dem Gegenläufer verbunden sind. Dies hat den Vorteil, daß die Nachgiebigkeit an die Anforderungen besser angepaßt werden kann, wodurch sich insbesondere der Komfort beim Einkuppeln erhöht. Beispielsweise kann vorgesehen werden, daß das dem inneren Radius zugeordnete Reibelement eine geringere Nachgiebigkeit als das dem äußeren Durchmesser zugeordnete Reibelement aufweist, so daß zunächst die Bereiche mit geringerer Umfangsgeschwindigkeit eine Kraftübertragung bewirken.

Bei einer nachgiebigen Anordnung der Reibelemente auf den Gegenläufer kann weiterhin vorgesehen werden, daß die durch die Reibelemente gebildete Reibfläche gegenüber der anderen Reibfläche angestellt verläuft. Es kann beispielsweise vorgesehen werden, daß der Abstand zwischen dem äußeren Bereich der Reibfläche und der gegenüberliegenden anderen Reibfläche kleiner als der Abstand zwischen dem inneren Bereich der Reibfläche und der gegenüberliegenden anderen Reibfläche ist. Dies hat den Vorteil, daß Verschleißerscheinigungen, die insbesondere im äußeren Bereich der Reibfläche aufgrund der höheren Reibgeschwindigkeiten auftreten, kompensiert werden können.

Die Verwendung von gesonderten Reibelementen hat neben der Möglichkeit der Optimierung der Reibpaarung den Vorteil, daß im Falle des Verschleisses lediglich die Reibelemente ausgewechselt werden müssen. Dadurch können die Reparaturkosten einer verschlissenen Kupplung niedrig gehalten werden und es fällt auch weniger zu entsorgender Abfall an.

In einer anderen Ausführungsform der Erfindung ist vorgesehen, daß der Gegenläufer der Kupplung als Zweimassenschwungrad ausgebildet ist und die die Reibfläche aufweisende Primärmasse aus Sintermetallwerkstoff besteht. Die Primärmasse eines Zweimassenschwungrades ist im allgemeinen wesentlich kleiner als die Sekundärmasse, so daß die vollständige Ausbildung des die Primärmasse bildenden Schwungrades aus Sintermetallwerkstoff zweckmäßig ist. Dabei kann vorgesehen werden, daß dieses Schwungrad beispielsweise mehrschichtig aufgebaut ist und die die Reibfläche bildende Schicht den Reibverhältnissen angepaßt ist.

In einer anderen Ausführungsform der Erfindung ist vorgesehen, daß das Reibmaterial auf den Gegenläufer aufgesintert ist. Insbesondere ist es möglich, daß das Reibmaterial auf bereits vorhandene Gegenläufer, beispielsweise im Reparaturfall, aufgebracht werden kann. Auch bei einem Verschleiß kann vorgesehen werden, daß lediglich die Reibmaterialschicht erneuert wird. Dadurch können die Reparaturkosten ebenfalls niederig gehalten werden und es fällt so gut wie kein zu entsorgender Abfall an.

Bei einer Mehrscheibenkupplung oder Lamellenkupplung kann es zweckmäßig sein, daß die Abtriebs- oder die Antriebslamellen aus Sintermetallwerkstoff bestehen. Auch hier ist es natürlich möglich, daß die Lamellen mehrschichtig ausgebildet sind.

In einer anderen Ausführungsform der Erfindung ist vorgesehen, daß die Kupplung als Kupplungsscheibe eine einstückige Scheibe aufweist, die zumindest im Bereich der Reibfläche aus Sintermetallwerkstoff besteht. Der Reibbelag ist in diesem Fall auf dem Gegenläufer angeordnet. Grundsätzlich ist es dabei möglich, daß der Reibbelag ebenfalls auf Reibelementen der eingangs geschilderten Art angeordnet ist. Aufgrund der geringen mechanischen Festigkeit solcher organischer Reibbeläge kann es hierbei zweckmäßig sein, die Reibelemente mehrschichtig auszubilden, wobei die Reibbelagschicht aus einem aufgeklebten Reibbelag und die Tragschicht beispielsweise aus Stahl bestehen kann. Insbesondere kann bei dieser Ausführungsform die Masse der Kupplungsscheibe und somit das Trägheitsmoment weiter verringert werden. Die Torsionsfederung wird bei einer derartigen Ausbildung zweckmäßigerweise in den Gegenläufer eingebaut.

Die Erfindung wird im folgenden anhand der Zeichnung näher erläutert. Es zeigen:

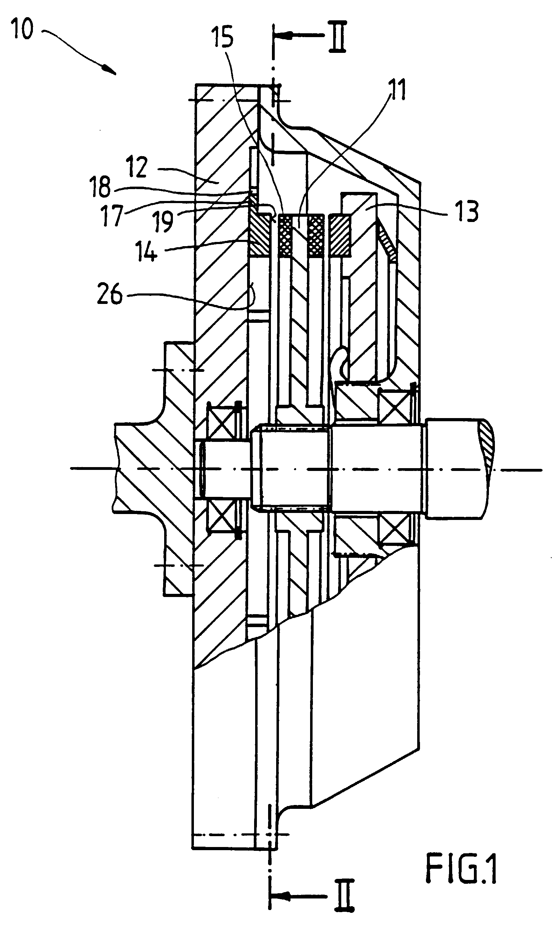

- Fig. 1: im Schnitt eine Kupplung gemäß der Erfindung,
- Fig. 2: einen Schnitt entlang der Linie II-II in Fig. 1,
- Fig. 3: die Untersicht eines Reibelementes,
- Fig. 4: die Untersicht eines Reibelementes in einer anderen Ausführungsform,
- Fig. 5: im Schnitt ein Reibelement,
- Fig. 6: die Draufsicht auf ein Reibelement und
- Fig. 7: im Schnitt die Befestigung eines Reibelementes mit dem Gegenläufer.

Die in der Zeichnung dargestellte Kupplung 10 weist eine Kupplungsscheibe 11, einen Gegenläufer 12 und eine Druckplatte 13 auf. Die Konstruktion und die Anordnung der einzelnen Bauelemente der Kupplung 10 entspricht im wesentlichen dem Aufbau einer üblichen Einscheibentrockenkupplung und wird daher im folgenden nicht näher erläutert. Insbesondere sind in der Zeichnung die Betätigungsmittel für die Druckplatte 13 nicht näher dargestellt.

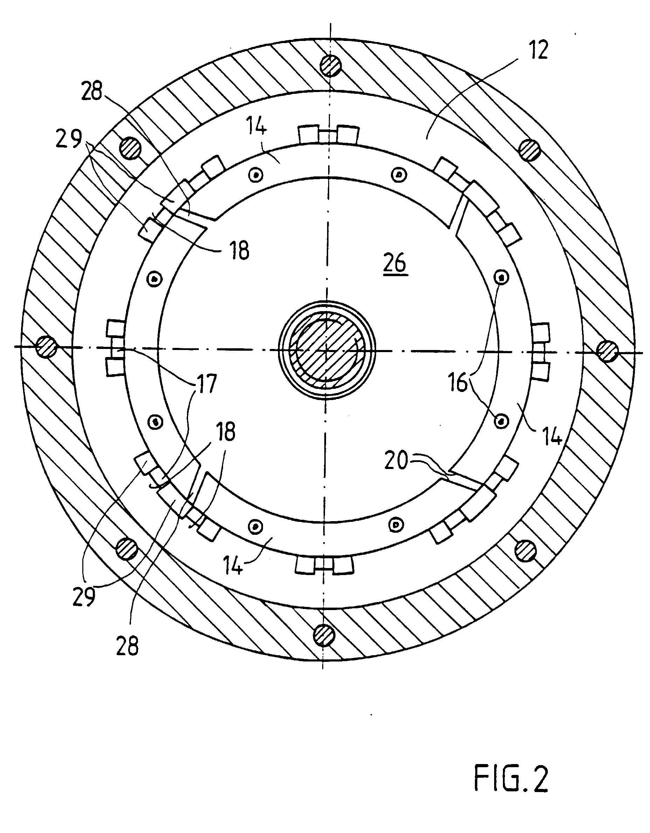

Auf dem Gegenläufer 12 sind Reibelemente 14 angeordnet, die mit dem auf der einen Seiten der Kupplungsscheibe 11 angeordneten Reibbelag 15 zusammenwirken. Bei dem in der Zeichnung dargestellten Ausführungsbeispiel weist der Gegenläufer 12 in Umfangsrichtung vier Reibelemente 14 auf, die sich jeweils in etwa über einen Viertelkreis erstrecken. Es ist natürlich auch die Verwendung eines einzigen ringförmigen Reibelementes oder die Verwendung einer anderen Anzahl von Reibelementen möglich. Um harte Übergänge zwischen zwei nebeneinanderliegenden Reibelementen zu vermeiden, verlaufen die Begrenzungskanten 20 nicht in radialer Richtung. Dadurch wird ein gleitender Übergang von dem einen zum anderen Reibelement ermöglicht. Wie aus Fig. 2 ersichtlich, ist zwischen den Reibelementen 14 in eingebauter Position jeweils ein Zwischenraum 28 vorhanden. Dadurch kann die Kühlung der Reibfläche und der Reibelemente verbessert werden.

Die Reibelemente 14 weisen auf ihrem äußeren Umfang radial nach außen gerichtete Vorsprünge 17 auf, die in entsprechende Aussparungen 18 des Gegenläufers 12 eingreifen, um eine formschlüssige Verbindung für die Übertragung des Drehmomentes herzustellen. Die Aussparungen 18 werden bei dem gezeigten Ausführungsbeispiel jeweils durch zwei axiale Vorsprünge 29 des Gegenläufers 12 gebildet. Es ist natürlich auch möglich, daß derartige Vorsprünge und Aussparungen auf der Innenseite angeordnet sind. Bei der in der Zeichnung dargestellten Ausführungsform sind die Reibelemente 14 mit Befestigungsschrauben 16, die auf der Reibfläche 19 angeordnet sind, auf dem Gegenläufer 12 befestigt. Es ist natürlich auch möglich, daß die Befestigungsschrauben außerhalb der Reibfläche 19, beispielsweise auf einem umlaufenden Vorsprung oder auf zumindest einem der Vorsprünge 17, angeordnet sind. Eine derartige Anordnung hat den Vorteil, daß der Aufbau von Luftpolstern zwischen den zusammenwirkenden Reibflächen vermieden wird. Weiterhin kann vorgesehen werden, daß die Reibelemente 14 von der der Reibfläche 19 abgekehrten Seite mittels durch entsprechende Durchgangsbohrungen im Gegenläufer 12 geführte Schrauben mit dem Gegenläufer 12 verbunden sind.

Die Reibelemente 14 können einschichtig aus einem Sintermetallwerkstoff gefertigt sein. Dieser Sintermetallwerkstoff kann beispielsweise 10 bis 15 Gewichtsprozent Kupfer beinhalten, der bessere Reibeigenschaften mit den beispielsweise aus organischem Material bestehenden Reibbelag 15 aufweist. Es ist natürlich auch möglich, daß das Reibelement 14 mehrschichtig aufgebaut ist. Wie insbesondere aus Fig. 5 ersichtlich, weist ein derartiges Reibelement 14 eine Trägerschicht 21 auf, die mit einer Schicht aus dem gewünschten Reibmaterial 22 versehen ist.

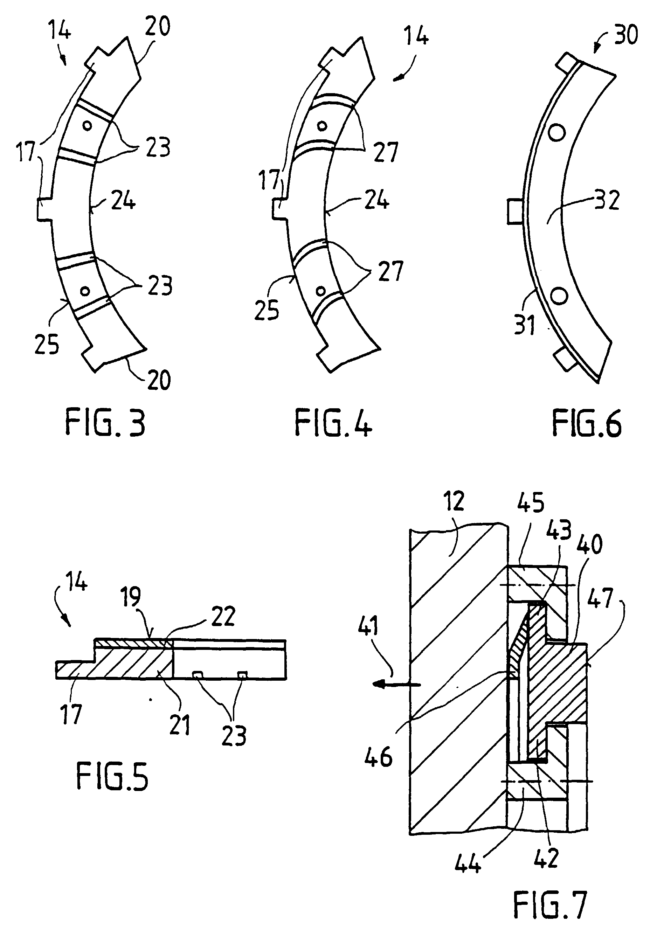

Das Reibelement 14 ist, wie insbesondere aus Fig. 3 ersichtlich, auf seiner Unterseite mit radial verlaufenden Nuten 23 versehen, die sich von der inneren Umfangsseite 24 zur äußeren Umfangsseite 25 des Reibelementes 14 erstrecken. Bei der Ausführungsform gemäß Fig. 4 sind die Nuten 27 in etwa bogenförmig ausgebildet. In eingebauter Position bilden diese Nuten 23 mit der entsprechenden Oberfläche 26 des Gegenläufers 12 Kanäle, durch welche die Luft zur Kühlung der Reibelemente und der Reibfläche strömen kann.

In Fig. 6 ist eine andere Ausführungsform eines Reibelementes 30 dargestellt. Das Reibelement 30 besteht an seinen Randbereichen 31 aus einem anderen Material als in dem Bereich der übrigen Reibfläche 32. Die Herstellung eines derartig mehrschichtig ausgebildeten Reibelementes 30 ist mittels pulvermetallurgischer Verfahren ohne weiteres möglich. Die Randbereiche 31 können beispielsweise aus einem Material mit höherer Verschleißfestigkeit bestehen, um dem in der Regel in diesem Bereich vorkommenden erhöhten Verschleiß entgegenzuwirken.

In Fig. 7 ist eine Befestigungsmöglichkeit eines Reibelementes 40 auf den Gegenläufer 12 dargestellt, bei dem das Reibelement 40 in axialer Richtung 41 nachgiebig gelagert ist. Dazu weist das Reibelement 40 auf seinem inneren und äußeren Umfang zumindest teilweise umlaufende Vorsprünge 42 bzw. 43 auf, die durch entsprechende mit dem Gegenläufer 12, beispielsweise durch Schrauben, verbindbare Halteelemente 44 bzw. 45 zusammenwirken. Die Vorsprünge 42 bzw. 43 können dabei mit Ausnehmungen versehen sein, in die entspechende Vorsprünge der Haltelemente 44 bzw. 45 oder unmittelbar auf dem Gegenläufer 12 angeordnete Vorsprünge eingreifen, um eine formschlüssige Übertragung des Drehmoments zu ermöglichen. Die Halteelemente 44, 45 sind im Querschnitt im wesentlichen L-förmig ausgebildet, wobei der eine Schenkel einen axialen Anschlag für das Reibelement 40 bildet. Das Reibelement 40 wird durch ein beispielsweise als Tellerfeder ausgebildetes Federelement 46 gegen diesen axialen Anschlag gedrückt. Durch diese Anordnung wird gewährleistet, daß sich in axialer Richtung die Reibfläche 47 in ausgekuppelter Position stets in einem definierten Abstand zum Reibbelag der Kupplungsscheibe befindet. Im eingekuppelten Zustand wird das Reibelement 40 gegen die Federkraft der Tellerfeder 46 bis zum Anschlag gedrückt. Dieser Weg beträgt im allgemeinen lediglich wenige Millimeter oder nur Bruchteile eines Millimeters.

Vorstehend wurde lediglich die Anordnung von Reibelementen 14 auf einem Gegenläufer 12 erläutert. Es ist natürlich möglich und auch zweckmäßig, derartige Reibelemente auf der Druckplatte 13 der Kupplung 10 vorzusehen. Die Befestigung und Anordnung der Reibelemente im einzelnen erfolgt entsprechend wie bei der Befestigung und Anordnung der Reibelemente auf dem Gegenläufer.

## Patentansprüche

1. Schaltbare Kupplung (10), insbesondere für Kraftfahrzeuge, mit wenigstens einer Kupplungsscheibe (11), die beidseitig mit Reibbelägen (15) aus einem organisch gebundenen Reibmaterial versehen ist, sowie mit wenigstens einem Gegenläufer (12) und einer Druckplatte (13), die jeweils mit Reibelementen (14, 30, 40) versehen sind, wobei zumindest die Druckplatte (13) eine Reibfläche (19) aus einem Sintermetallwerkstoff aufweist, wobei die für eine optimale Reibpaarung zwischen dem organisch gebundenen Reibmaterial an der Kupplungsscheibe (11) und dem Sintermetallwerkstoff der Reibelemente notwendigen schweren Bestandteile nicht im organisch gebundenen Reibmaterial sondern im Sinterwerkstoff enthalten sind.

2. Kupplung nach Anspruch 1, dadurch gekennzeichnet, daß das Reibmaterial 10 bis 15 Gewichtsprozent Kupfer (Cu) aufweist.

3. Kupplung nach Anspruch 1 oder 2, dadurch gekennzeichnet, daß die Reibfläche (19) aus Sintermetallwerkstoff auf wenigstens einem Reibelement (14, 30, 40) angeordnet ist, das mit dem Gegenläufer (12) verbunden ist.

4. Kupplung nach einem der Ansprüche 1 bis 3, dadurch gekennzeichnet, daß das Reibelement (14, 30, 40) lösbar mit dem Gegenläufer (12) verbunden ist.

5. Kupplung nach einem der Ansprüche 1 bis 4, dadurch gekennzeichnet, daß das Reibelement (14, 30, 40) wenigstens einen Vorsprung (17) und/oder eine Aussparung aufweist, der bzw. die mit einer entsprechenden Aussparung (18) bzw. einem entsprechenden Vorsprung des Gegenläufers (12) in Umlaufrichtung formschlüssig zusammenwirkt.

6. Kupplung nach einem der Ansprüche 1 bis 5, dadurch gekennzeichnet, daß das Reibelement (14) einstückig aus dem Sintermetallwerkstoff gebildet ist.

7. Kupplung nach einem der Ansprüche 1 bis 6, dadurch gekennzeichnet, daß das Reibelement (14) in axialer Richtung mehrschichtig aufgebaut ist und zumindest die Reibbelagschicht (22) aus einem Sintermetallwerkstoff besteht.

8. Kupplung nach einem der Ansprüche 1 bis 7, dadurch gekennzeichnet, daß das Reibelement (30) zumindest an einem der der Reibfläche zugekehrten Randbereiche (31) ein anderes Material als das der übrigen Reibfläche (32) aufweist.

9. Kupplung nach einem der Ansprüche 1 bis 6, dadurch gekennzeichnet, daß die Reibfläche (19) entlang dem Umfang auf wenigstens zwei Reibelementen (14, 30, 40) angeordnet ist.

10. Kupplung nach einem der Ansprüche 1 bis 9, dadurch gekennzeichnet, daß die Reibfläche (19) in radialer Richtung auf wenigstens zwei Reibelementen angeordnet ist.

11. Kupplung nach einem der Ansprüche 1 bis 10, dadurch gekennzeichnet, daß die Begrenzungskanten (20) der Reibfläche (19) des Reibelementes (14, 30, 40) in Umfangsrichtung zumindest teilweise in einer von der radialen Richtung abweichenden Richtung verlaufen.

12. Kupplung nach einem der Ansprüche 1 bis 11, dadurch gekennzeichnet, daß zwischen den Reibelementen (14) in Einbauposition ein Zwischenraum (28) vorhanden ist.

13. Kupplung nach einem der Ansprüche 1 bis 12, dadurch gekennzeichnet, daß das Reibelement (14) zumindest an seiner der Reibfläche abgekehrten Seite mit wenigstens einer sich von der inneren zur äußeren Umfangsseite (24, 25) erstreckenden Nut (23, 27) versehen ist.

14. Kupplung nach Anspruch 13, dadurch gekennzeichnet, daß die Nut (27) bogenförmig verläuft.

15. Kupplung nach einem der Ansprüche 1 bis 14, dadurch gekennzeichnet, daß das Reibelement (40) in axialer Richtung (41) nachgiebig mit dem Gegenläufer (12) verbunden ist.

16. Kupplung nach einem der Ansprüche 1 bis 15, dadurch gekennzeichnet, daß bei Unterteilung der Reibfläche (19) in radialer Richtung auf wenigstens zwei Reibelemente die jeweils unterschiedlichen Durchmessern zugeordneten Reibelemente mit unterschiedlichen Nachgiebigkeiten mit dem Gegenläufer (12) verbunden sind.

17. Kupplung nach Anspruch 15 oder 16, dadurch gekennzeichnet, daß die durch die Reibelemente gebildete Reibfläche gegenüber der anderen Reibfläche angestellt verläuft.

18. Kupplung nach Anspruch 1 oder 2, dadurch gekennzeichnet, daß der Gegenläufer (12) als Zweimassenschwungrad ausgebildet ist und das die Primärmasse bildende Schwungrad zumindest im Bereich der Reibfläche aus Sintenmetallwerkstoff besteht.

19. Kupplung nach Anspruch 1 oder 2, dadurch gekennzeichnet, daß das Reibmaterial auf den Gegenläufer (12) und/oder auf die Druckplatte (13) aufgesintert ist.

20. Kupplung nach einem der Ansprüche 1 bis 19, dadurch gekennzeichnet, daß die Kupplung als Einscheibentrockenkupplung ausgebildet ist.

21. Kupplung nach einem der Ansprüche 1 bis 19, dadurch gekennzeichnet, daß die Kupplung als Mehrscheibenkupplung ausgebildet ist und entweder die Abtriebslamellen oder die Antriebslamellen zumindest im Bereich der Reibflächen aus Sintermetallwerkstoff bestehen.

22. Kupplung nach einem der Ansprüche 1 bis 21, dadurch gekennzeichnet, daß die Reibelemente zumindest im Bereich der Reibfläche anstelle aus Sintermetallwerkstoff aus einem organischen Reibbelag bestehen und die Kupplungsscheibe zumindest im Bereich der Reibflächen aus Sintermetallwerkstoff besteht.

23. Kupplung nach Anspruch 22, dadurch gekennzeichnet, daß die Kupplungsscheibe einstückig aus Metall besteht und zumindest im Bereich der Reibflächen aus Sintermetallwerkstoff besteht.

24. Kupplung nach einem der vorhergehenden Ansprüche, dadurch gekennzeichnet, daß die Druckplatte (13) mit wenigstens einem Reibelement gemäß den Ansprüchen 3 bis 18 versehen ist.

## Claims

1. A clutch (10), in particular for motor vehicles, having at least one clutch disk (11), which is provided on both sides with friction linings (15) of an organically bound friction material, together with at least one fly rotor (12) and one pressure plate (13), which are each provided with friction elements (14, 30, 40), at least the pressure plate (13) comprising a friction surface (19) of a sintered metal material, the heavy components necessary for optimum friction pairing between the organically bound friction material on the clutch disk (11) and the sintered metal material of the friction elements not being contained in the organically bound friction material but rather in the sintered material.

2. A clutch according to claim 1, characterised in that the friction material comprises from 10 to 15 percent by weight copper (Cu).

3. A clutch according to claim 1 or claim 2, characterised in that the friction surface (19) of sintered metal material is arranged on at least one friction element (14, 30, 40), which is connected to the fly rotor (12).

4. A clutch according to one of claims 1 to 3, characterised in that the friction element (14, 30, 40) is connected releasably with the fly rotor (12).

5. A clutch according to one of claims 1 to 4, characterised in that the friction element (14, 30, 40) comprises at least one projection (17) and/or recess which cooperates respectively with a corresponding recess (18) or a corresponding projection of the fly rotor (12) in form-fitting manner in the direction of rotation.

6. A clutch according to one of claims 1 to 5, characterised in that the friction element (14) is formed in one piece from the sintered metal material.

7. A clutch according to one of claims 1 to 6, characterised in that the fiction element (14) is of multi-layer construction in the axial direction and at least the friction lining layer (22) consists of a sintered metal material.

8. A clutch according to one of claims 1 to 7, characterised in that the friction element (30) is of a different material at least at one of the edge areas (31) facing the friction surface from that of the remaining friction surface (32).

9. A clutch according to one of claims 1 to 8, characterised in that the friction surface (19) is arranged around the circumference on at least two friction elements (14, 30, 40).

10. A clutch according to one of claims 1 to 9, characterised in that the friction surface (19) is arranged in the radial direction on at least two friction elements.

11. A clutch according to one of claims 1 to 10, characterised in that the defining edge, (20) of the friction surface (19) of the friction element (14, 30, 40) extend in the circumferential direction at least in part in a direction other than the radial direction.

12. A clutch according to one of claims 1 to 11, characterised in that a space (28) is present between the friction elements (14) in the installed position.

13. A clutch according to one of claims 1 to 12, characterised in that the friction element (14) is provided, at least on its side remote from the friction surface, with at least one groove (23, 27) extending from the inner to the outer circumferential side (24, 25).

14. A clutch according to claim 13, characterised in that the groove (27) extends in an arcuate manner.

15. A clutch according to one of claims 1 to 14, characterised in that the friction element (40) is connected resiliently in the axial direction (41) with the fly rotor (12).

16. A clutch according to one of claims 1 to 15, characterised in that, if the friction surface (19) is subdivided in the radial direction between at least two friction elements, the friction elements, respectively assigned different diameters, are connected to the fly rotor (12) with different levels of resilience.

17. A clutch according to claim 15 or claim 16, characterised in that the friction surface formed by the friction elements extends in an adjusted manner with respect to the other friction surface.

18. a clutch according to claim 1 or claim 2, characterised in that the fly rotor (12) takes the form of a two-mass flywheel and in that the flywheel forming the primary mass consists of sintered metal material at least in the area of the friction surface.

19. A clutch according to claim 1 or claim 2, characterised in that the friction material is sintered onto the fly rotor (12) and/or the pressure plate (13).

20. A clutch according to one of claims 1 to 19, characterised in that the clutch takes the form of a single dry plate clutch.

21. A clutch according to one of claims 1 to 19, characterised in that the clutch takes the form of a multiplate clutch and either the driven disks or the driving disks consist of sintered metal material at least in the area of the friction surfaces.

22. A clutch according to one of claims 1 to 21, characterised in that the friction elements consist of an organic friction lining instead of sintered metal material at least in the area of the friction surface and the clutch disk consists of sintered metal material at least in the area of the friction surfaces.

23. A clutch according to claim 22, characterised in that the clutch disk is in one piece and consists of metal and consists of sintered metal material at least in the area of the friction surfaces.

24. A clutch according to one of the preceding claims, characterised in that the pressure plate (13) is provided with at least one friction element according to claims 3 to 18.

## Revendications

1. Embrayage de couplage (10) destiné notamment à des véhicules automobiles, comportant au moins un disque d'embrayage (11) qui est muni de part et d'autre de garnitures de friction (15) en un matériau de friction organiquement lié, ainsi qu'au moins un dispositif à mouvement antagoniste (12) et une plaque de compression (13), qui sont respectivement munis d'éléments de friction (14, 30, 40), au moins la plaque de compression (13) comportant une surface de friction (19) en un matériau métallique fritté, les composés lourds nécessaires à un couple de friction optimal entre le matériau de friction organiquement lié du disque d'embrayage (11) et le matériau métallique fritté des éléments de friction n'étant pas contenus dans le matériau de friction organiquement lié, mais dans le matériau fritté.

2. Embrayage selon la revendication 1, caractérisé en ce que le matériau de friction contient 10 à 15 % en poids de cuivre (Cu).

3. Embrayage selon la revendication 1 ou 2, caractérisé en ce que la surface de friction (19) en matériau métallique fritté est disposée sur au moins un élément de friction (14, 30, 40) qui est relié au dispositif à mouvement antagoniste (12).

4. Embrayage selon l'une quelconque des revendications 1 à 3, caractérisé en ce que l'élément de friction (14, 30, 40) est relié de façon amovible au dispositif à mouvement antagoniste (12).

5. Embrayage selon l'une quelconque des revendications 1 à 4, caractérisé en ce que l'élément de friction (14, 30, 40) comporte au moins une partie en saillie (17) et/ou un évidement qui, dans le sens de rotation, coopère par complémentarité de forme avec un évidement (18) correspondant ou avec une partie en saillie correspondante du dispositif à mouvement antagoniste (12).

6. Embrayage selon l'une quelconque des revendications 1 à 5, caractérisé en ce que l'élément de friction (14) est formé d'un seul tenant à partir du matériau métallique fritté.

7. Embrayage selon l'une quelconque des revendications 1 à 6, caractérisé en ce que l'élément de friction (14) est réalisé en plusieurs couches dans la direction axiale, et en ce qu'au moins la couche de garniture de friction (22) est constituée d'un matériau métallique fritté.

8. Embrayage selon l'une quelconque des revendications 1 à 7, caractérisé en ce que l'élément de friction (30) est constitué, au moins au niveau de l'une des zones de bord (31) orientée vers la surface de friction, d'un matériau autre que celui du reste de la surface de friction (32).

9. Embrayage selon l'une quelconque des revendications 1 à 8, caractérisé en ce que la surface de friction (19) est disposée le long de la circonférence sur au moins deux éléments de friction (14, 30, 40).

10. Embrayage selon l'une quelconque des revendications 1 à 9, caractérisé en ce que la surface de friction (19) est disposée dans la direction radiale sur au moins deux éléments de friction.

11. Embrayage selon l'une quelconque des revendications 1 à 10, caractérisé en ce que les bords de délimitation (20) de la surface de friction (19) de l'élément de friction (14, 30, 40) s'étendent dans la direction circonférentielle, au moins partiellement, dans une direction autre que la direction radiale.

12. Embrayage selon l'une quelconque des revendications 1 à 11, caractérisé en ce qu'un espace intermédiaire (28) existe à l'état monté entre les éléments de friction (14).

13. Embrayage selon l'une quelconque des revendications 1 à 12, caractérisé en ce que l'élément de friction (14) est muni, au moins sur sa face opposée à la surface de friction, d'au moins une rainure (23, 27) qui s'étend de la face circonférentielle intérieure vers la face circonférentielle extérieure (24, 25).

14. Embrayage selon la revendication 13, caractérisé en ce que la rainure (27) s'étend en forme courbe.

15. Embrayage selon l'une quelconque des revendications 1 à 14, caractérisé en ce que dans la direction axiale (41), l'élément de friction (40) est relié élastiquement au dispositif à mouvement antagoniste (12).

16. Embrayage selon l'une quelconque des revendications 1 à 15, caractérisé en ce que, lorsque la surface de friction (19) est subdivisée dans la direction radiale en au moins deux éléments de friction, les éléments de friction respectivement associés à différents diamètres sont reliés avec différentes élasticités au dispositif à mouvement antagoniste (12).

17. Embrayage selon la revendication 15 ou 16, caractérisé en ce que la surface de friction formée par les éléments de friction s'étend de façon incidente par rapport à l'autre surface de friction.

18. Embrayage selon la revendication 1 ou 2, caractérisé en ce que le dispositif à mouvement antagoniste (12) est réalisé sous la forme d'un volant à deux masses, et en ce que le volant formant la masse primaire est constitué de matériau métallique fritté, au moins dans la zone de la surface de friction.

19. Embrayage selon la revendication 1 ou 2, caractérisé en ce que le matériau de friction est fritté sur le dispositif à mouvement antagoniste (12) et/ou sur la plaque de compression (13).

20. Embrayage selon l'une quelconque des revendications 1 à 19, caractérisé en ce que l'embrayage est réalisé sous la forme d'un embrayage sec à un seul disque.

21. Embrayage selon l'une quelconque des revendications 1 à 19, caractérisé en ce que l'embrayage est réalisé sous la forme d'un embrayage à disques multiples, et en ce que les lamelles d'entraînement, ou au moins les lamelles d'entraînement situées dans la zone des surfaces de friction, sont constituées de matériau métallique fritté.

22. Embrayage selon l'une quelconque des revendications 1 à 21, caractérisé en ce que, au lieu de matériau métallique fritté, les éléments de friction sont constitués d'une garniture de friction organique, au moins dans la zone de la surface de friction, et en ce que le disque d'embrayage est constitué de matériau métallique fritté, au moins dans la zone des surfaces de friction.

23. Embrayage selon la revendication 22, caractérisé en ce que le disque d'embrayage est réalisé d'un seul tenant en métal, et est constitué en matériau métallique fritté, au moins dans la zone des surfaces de friction.

24. Embrayage selon l'une quelconque des revendications précédentes, caractérisé en ce que la plaque de compression (13) est munie d'au moins un élément de friction selon les revendications 3 à 18.
